# EUROPEAN PATENT SPECIFICATION

(11) **EP 0 574 087 B1**
(45) Date of publication and mention of the grant of the patent: **18.12.1996**
(21) Application number: 93201621.5
(22) Date of filing: 08.06.1993
(51) Int. Cl.: B65G 23/44

(54) **Take-up for chain conveyors**
Spanneinrichtung für Kettenförderer
Dispositif tendeur pour transporteurs à chaîne

(30) Priority: 09.06.1992 JP 149501/92
(43) Date of publication of application: 15.12.1993
(73) Proprietor: Shikoku Kakoki Co., Ltd., Itano-gun, Tokushima, 771-02 (JP)
(72) Inventor: Ueda, Michio, c/o Shikoku Kakoki Co., Ltd., Itano-gun, Tokushima 771-02 (JP); Wakabayashi, Shigeru, c/o Shikoku Kakoki Co., Ltd., Itano-gun, Tokushima 771-02 (JP); Abe, Kazuo, c/o Shikoku Kakoki Co., Ltd., Itano-gun, Tokushima 771-02 (JP); Hirose, Shoji, c/o Shikoku Kakoki Co., Ltd., Itano-gun, Tokushima 771-02 (JP); Nishioka, Shoji, c/o Shikoku Kakoki Co., Ltd., Itano-gun, Tokushima 771-02 (JP); Fujikawa, Yasuji, c/o Shikoku Kakoki Co., Ltd., Itano-gun, Tokushima 771-02 (JP)
(74) Representative: Vollebregt, Cornelis Jacobus, Ir.

(56) References cited:
- DE-A- 2 535 437
- GB-A- 2 042 453
- US-A- 4 372 440

## Description

The present invention relates to a take-up for absorbing slack in chains for use in packaging machines which have a chain conveyor for transporting containers via stations such as filling and sealing stations successively.

Already known as such take-ups are those of the screw type which comprise a post attached to a driven sprocket having a chain reeved therearound, and a screw rod rotatable by the operator to thereby move the post in such a direction that the driven sprocket is moved toward or away from a drive sprocket, the post being lockable in the moved position.

With the conventional take-up described, the distance the post is moved by the skill of the operator tends to vary, presenting difficulity in tensioning the chain desirably. In an extreme case, the chain is tensioned to an extent more than is necessary and becomes further elongated.

### SUMMARY OF THE INVENTION

The main object of the present invention is to provide a take-up for chain conveyors which is adapted to apply desired tension to the chain regardless of the skill of the operator.

The present invention relates to a take-up for chain conveyors which comprises a support arm having a driven sprocket mounted on an outer end thereof and provided with a chain therearound, the support arm being pivotally movable over a predetermined range so as to move the driven sprocket toward or away from a drive sprocket, means for urging the support arm in a direction to move the driven sprocket away from the drive sprocket, as known from US-A-4,372,440 wherein during operation the spring loaded support arm can move to and fro.

According to the invention the take-up comprises means for releasably locking the support arm in a desired position within the range of pivotal movement.

When the support arm of the take-up of the present invention is released from the locking means, the support arm is rendered free to move pivotally and is pivotally moved by the urging force of the urging means in the direction in which the driven sprocket is moved away from the drive sprocket, whereby the chain reeved around the driven sprocket is given tension corresponding to the urging force of the urging means.

Accordingly, the chain can be tensioned desirably regardless of the skill of the operator.

### BRIEF DESCRIPTION OF THE DRAWINGS

FIG. 1 is a perspective view of a conveyor embodying the invention;
FIG. 2 is a front view of the conveyor;
FIG. 3 is a plan view of the conveyor;
FIG. 4 is a view in section taken along the line IV-IV in FIG. 3;
FIG. 5 is a view in section taken along the line V-V in FIG. 4; and
FIG. 6 is a sectional view corresponding to FIG. 4 and showing a modified telescopic rod.

### DESCRIPTION OF THE PREFERRED EMBODIMENT

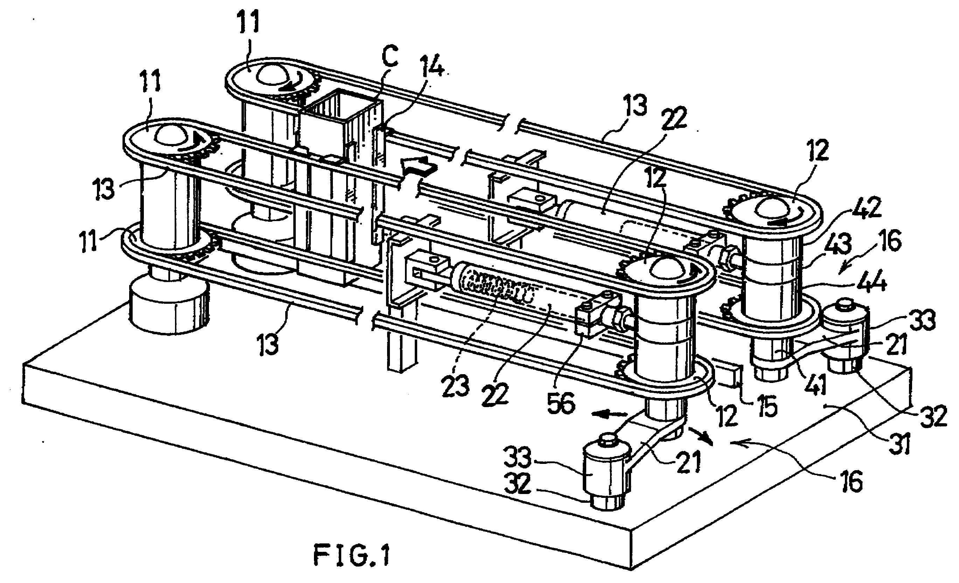

An embodiment of the invention will be described below with reference to the drawings. In the following description, the term "front" refers to the direction (indicated by an arrow in FIG. 1) of transport of containers by the illustrated conveyor, the term "rear" to a direction opposite to this direction, and the terms "right" and "left" are used as the conveyor is viewed from the rear toward the front.

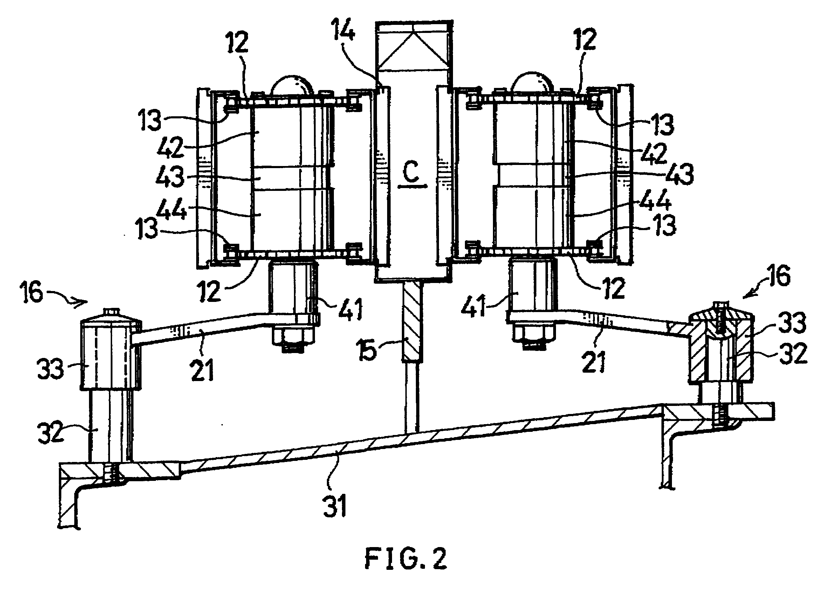

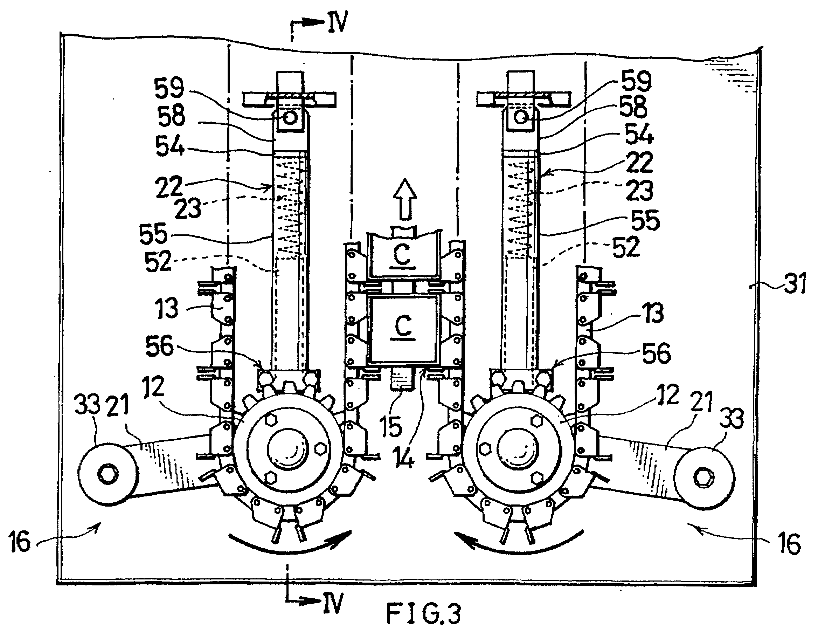

FIGS. 1 to 3 show a chain conveyor which comprises, as arranged on each of right and left sides of its center line, a pair of upper and lower front drive sprockets 11, a pair of upper and lower rear driven sprockets 12, a pair of upper and lower endless chains 13 reeved around the respective upper and lower pairs of drive sprockets 11 and driven sprockets 12, and a take-up 16 for absorbing elongation of the pair of upper and lower chains 13, the conveyor further comprising container holders 14 provided by vertical pieces each L-shaped in cross section, connected between the upper and lower chains 13 on the right and left sides and arranged at a predetermined spacing, and a rail 15 for guiding containers C as held by the respective holders 14 with the bottom of each container supported by the rail.

Although oriented rightward or leftward in opposite directions, the right and left take-ups 16 are of identical construction, so that the left take-up 16 will be described below.

The take-up 16 comprises a horizontally pivotally movable support arm 21 extending rightward and having the upper and lower driven sprockets 12 mounted on its outer end, a horizontal telescopic rod 22 extending rearward and stretchable or contractable with the pivotal movement of the support arm 21, and a coiled compression spring 23 urging the telescopic rod 22 to stretch.

A post 32 is provided upright on a bed 31 and positioned at the left of the driven sprockets 12 obliquely therebelow. A vertical mount sleeve 33 formed at the base end of the support arm 21 is rotatabley fitted over the post 32. When seen from above, the post 32 is situated slightly to the rear of a position exactly lateral to the center of rotation of the driven sprockets 12.

An upper rotary sleeve 42, intermediate connecting sleeve 43 and lower rotary sleeve 44 are fitted around a vertical support shaft 41 extending upright from the outer end of the support arm 21. The upper driven sprocket 12 is attached to the upper end face of the upper rotary sleeve 42, and the lower driven sprocket 12 to the lower end face of the lower rotary sleeve 44. A pair of upper and lower bearings, i.e., first and second bearings 45, and an annular spacer 46 are provided between the support shaft 41 and the upper rotary sleeve 42. Similarly, a pair of upper and lower bearings, i.e., third and fourth bearings 45, and an annular spacer 46 are provided between the support shaft 41 and the lower rotary sleeve 44. A tubular spacer 47 fitting around the support shaft 41 is interposed between the second bearing 45 and the third bearing 45. The connecting sleeve 43 is rotatably fitted around the spacer 47. The connecting sleeve 43 has an outside diameter approximately equal to the inside diameter of the rotary sleeves 42, 44 and is provided at the middle of height of its outer surface with a flange 48 slidably held between the upper and lower rotary sleeves 42, 44. An upper oil seal 49 is attached to the lower end of the upper rotary sleeve 42 inside thereof, and a lower oil seal 49 to the upper end of the lower rotary sleeve 44 inside thereof. These oil seals are in contact with the upper and lower ends of the outer surface of the connecting sleeve 43.

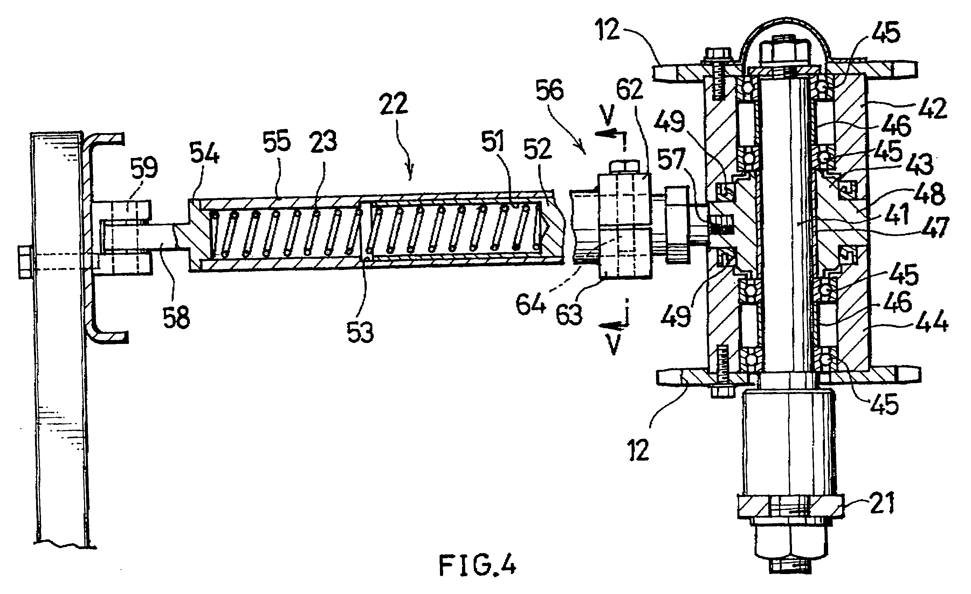

As shown in detail in FIG. 4, the telescopic rod 22 comprises a spigot rod member 52 formed with a blind bore 51 having a front opening, a socket pipe 55 having a front-end closure 54 and a large-diameter portion 53 with the spigot rod member 52 slidably fitted therein, and a lock mechanism 56 by which the spigot rod member 52 axially slidably inserted in the socket pipe 55 is locked to the pipe.

The spigot rod member 52 has at its rear end an externally threaded portion 57 screwed into the flange 48 of the connecting sleeve 43. A vertical pin 59 attached to the bed 31 extends through a forward projection 58 formed on the front-end closure 54 to render the socket pipe 55 free to pivotally move horizontally.

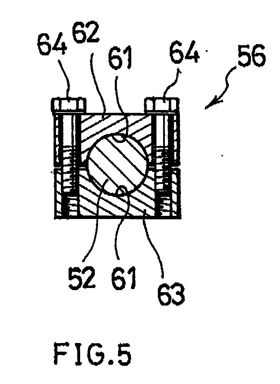

As shown in detail in FIG. 5, the lock mechanism 56 comprises a pair of upper and lower divided pieces 62, 63 so arranged as to hold the spigot rod member 52 therebetween from above and below and formed with semicircular cutouts 61 opposed to each other with the rod member 52 extending therethrough, and a pair of fastening bolts 64 extending through the respective opposite ends of the upper divided piece 62 and screwed into the respective opposite ends of the lower divided piece 63. The upper 62 of the two pieces 62, 63 is secured to the rear end of the socket pipe 55.

The spring 23 is accommodated in the socket pipe 55 with a rear portion thereof inserted in the bore 51 of the spigot rod member 52, and is held between the bottom of the bored portion 51 and the closure 55.

When the fastening bolts 64 are loosened, the spigot rod member 52 becomes free to move axially as inserted in the socket pipe 55, and the spring 23 acts to push out the spigot rod member 52 from the socket pipe 55. If there is a slack in the chains 13 at this time, the spigot rod member 52 is forced outwardly of the socket pipe 55, stretching the telescopic rod 22 and thereby pivotally moving the support arm 21 rearward. When the support arm 21 is brought to a halt with the chains 13 tightly drawn, the chains 13 are given tension corresponding to the urging force of the spring 23. The fastening bolts 64 are tightened up in this state, whereby the spigot rod member 52 is locked to the socket pipe 55 against axial movement relative thereto, restraining the support arm 21 from pivotal movement and holding the chains 13 tensioned as specified.

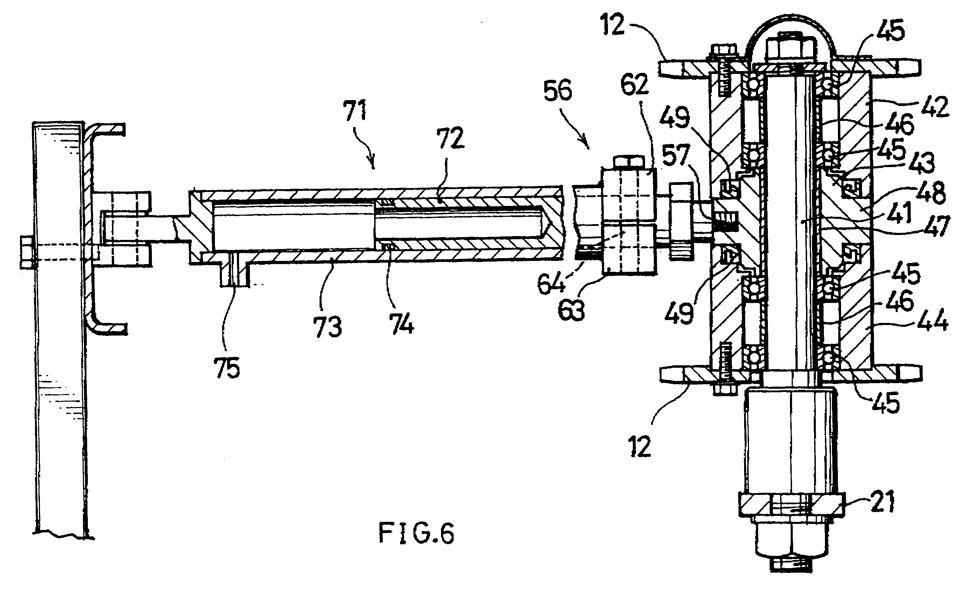

FIG. 6 shows a modified telescopic rod 71, which comprises a spigot rod member 72 and a socket pipe 73 like the telescopic rod 22 described. Instead of the coiled compression spring 23, compressed air is used as means for urging the telescopic rod 71 to stretch. An O-ring 74 is provided around the spigot rod member 72, and the peripheral wall of the socket pipe 73 has an air supply port 75. Although not shown, the air supply port 75 is in communication with a compressed air source via a regulator.

## Claims

1. A take-up for chain conveyors comprising:
a support arm (21) having a driven sprocket (12) mounted on an outer end thereof and provided with a chain (13) therearound, the support arm (21) being pivotally movable over a predetermined range so as to move the driven sprocket (12) toward or away from a drive sprocket (11),
means for urging the support arm (21) in a direction to move the driven sprocket (12) away from the drive sprocket (11), characterised by
means (56) for releasably locking the support arm (21) in a desired position within the range of pivotal movement.

2. A take-up as defined in claim 1 wherein the urging means comprises a telescopic rod (22) stretchable when the support arm (21)is pivotally moved to move the driven sprocket (12) away from the drive sprocket (11) and elastic means urging the telescopic rod (22) to stretch.

3. A take-up as defined in claim 2 wherein the elastic means is a spring (23).

4. A take-up as defined in claim 2 wherein the elastic means is compressed air.

5. A take-up as defined in claim 1 wherein the support arm (21) has a base portion supported by a bed (31,) and a support shaft (41) is provided between the driven sprocket (12) and the outer end of the support arm (21), the urging means comprising a connecting sleeve (43) rotatably fitted around the support shaft (41), a telescopic rod (22) comprising a socket pipe (55) pivotably supported by the bed (31) and a spigot rod member (52) slidably inserted in the socket pipe (55) and fixed to the connecting sleeve (43), and a compression spring (23) accommodated in the socket pipe (55) so as to project the spigot rod member (52) from the socket pipe (55).

6. A take-up as defined in claim 1 wherein the support arm (21) has a base portion supported by a bed (31), and a support shaft (41) is provided between the driven sprocket (12) and the outer end of the support arm (21), the urging means comprising a connecting sleeve (43) rotatably fitted around the support shaft (41,) a telescopic rod (22) comprising a socket pipe (55) pivotably supported by the bed (31) and spigot rod member (52) slidably inserted in the socket pipe (55) and fixed to the connecting sleeve (43,) and a compression spring (23) accommodated in the socket pipe (55) so as to project the spigot rod member (52) from the socket pipe (55,) the locking means (56) comprising a pair of divided pieces (62), (63) so arranged as to hold the spigot rod member (52) therebetween, one of the divided pieces being secured to the socket pipe (55), and fastening bolts (64) extending through one of the divided pieces (62), (63) and screwed in the other divided piece.

## Patentansprüche

1. Eine Spanneinrichrung für Kettenförderer mit:
einem Tragarm (21), der ein äußeres Ende hat, an dem ein angetriebenes Kettenrad (12) montiert ist, und mit einer Kette (13) darum versehen ist, wobei der Tragarm (21) über einen vorgegebenen Bereich schwenkend bewegbar ist, um das angetriebene Kettenrad (12) in Richtung oder weg von einem Antriebskettenrad (11) zu bewegen,
einem Mittel, um den Tragarm (21) in eine Richtung zu beaufschlagen, um das angetriebene Kettenrad (12) weg von dem Antriebskettenrad (11) zu bewegen,
gekennzeichnet durch
ein Mittel (56), um den Tragarm (21) in einer gewünschten Position innerhalb des Bereichs der Schwenkbewegung lösbar zu verriegeln.

2. Eine Spanneinrichtung wie in Anspruch 1 definiert, worin das Beaufschlagungsmittel eine Teleskopstange (22), die streckbar ist, wenn der Tragarm (21) schwenkend bewegt wird, um das angetriebene Kettenrad (12) von dem Antriebskettenrad (11) wegzubewegen, und ein elastisches Mittel, das die Teleskopstange (22) beaufschlagt, um diese zu strecken, aufweist.

3. Eine Spanneinrichtung wie in Anspruch 2 definiert, worin das elastische Mittel eine Feder (23) ist.

4. Eine Spanneinrichtung wie in Anspruch 2 definiert, worin das elastische Mittel Druckluft ist.

5. Eine Spanneinrichtung wie in Anspruch 1 definiert, worin der Tragarm (21) einen von einem Bett (31) getragenen Basisbereich hat und eine Tragachse (41) zwischen dem angetriebenen Kettenrad (12) und dem äußeren Ende des Tragarms (21) vorgesehen ist, das Beaufschlagungsmittel eine Verbindungshülse (43), die drehbar um die Tragachse (41) herum angeordnet ist, eine Teleskopstange (22) mit einem Muffenrohr (55), das schwenkbar durch das Bett (31) gehalten ist, und einem Führungsstangenelement (52), das verschiebbar in das Muffenrohr (55) eingesetzt und an der Verbindungshülse (43) befestigt ist, und eine Druckfeder (23), die in dem Muffenrohr (55) angeordnet ist, um das Führungsstangenelement (52) aus dem Muffenrohr (55) vorstehen zu lassen, aufweist.

6. Eine Spanneinrichtung wie in Anspruch 1 definiert, worin der Tragarm (21) einen durch ein Bett (31) getragenen Basisbereich hat und eine Tragachse (41) zwischen dem angetriebenen Kettenrad (12) und dem äußeren Ende des Tragarms (21) vorgesehen ist, wobei bei das Beaufschlagungsmittel eine Verbindungshülse (43), die drehbar um die Tragachse (41) herum angeordnet ist, eine Teleskopstange (22) mit einem Muffenrohr (55), das schwenkbar durch das Bett (31) gehalten ist, und einem Führungsstangenelement (52), das verschiebbar in das Muffenrohr (55) eingesetzt und an der Verbindungshülse (43) befestigt ist, und eine Druckfeder (23), die in dem Muffenrohr (55) angeordnet ist, um das Führungsstangenelement (52) aus dem Muffenrohr (55) vorstehen zu lassen, aufweist, wobei das Verriegelungsmittel (56) ein Paar von geteilten Stücken (62), (63) hat, die angeordnet sind, um das Führungsstangenelement (52) dazwischen zu halten, wobei eines der geteilten Stücke an dem Muffenrohr (55) befestigt ist und sich Befestigungsbolzen (64) durch eines der geteilten Stücke (62, 63) erstrecken und in das andere geteilte Stück eingeschraubt sind.

## Revendications

1. Tendeur pour transporteurs à chaînes, comprenant:
un bras de support (21) ayant un pignon à chaîne mené (12), qui est monté sur une extrémité extérieure de ce bras et autour duquel est disposée une chaîne (13), le bras de support (21) étant déplaçable par pivotement sur une plage prédéterminée de façon à rapprocher ou éloigner le pignon à chaîne mené (12) d'un pignon à chaîne menant (11),
des moyens pour solliciter le bras de support (21) dans une direction dans laquelle il éloigne le pignon à chaîne mené (12) du pignon à chaîne menant (11), caractérisé par
des moyens (56) pour verrouiller le bras de support (21), de façon libérable, dans une position souhaitée, à l'intérieur de la plage de mouvement pivotant.

2. Tendeur tel que défini dans la revendication 1, dans lequel les moyens de sollicitation comprennent une tige télescopique (22) pouvant être allongée quand le bras de support (21) subit un pivotement destiné à éloigner le pignon à chaîne mené (12) du pignon à chaîne menant (11), et un moyen élastique sollicitant la tige télescopique (22) dans le sens de l'allongement.

3. Tendeur tel que défini dans la revendication 2, dans lequel le moyen élastique est un ressort (23).

4. Tendeur tel que défini dans la revendication 2, dans lequel le moyen élastique est de l'air comprimé.

5. Tendeur tel que défini dans la revendication 1, dans lequel le bras de support (21) comporte une partie de base supportée par une sole (31), et un arbre de support (41) est disposé entre le pignon à chaîne mené (12) et l'extrémité extérieure du bras de support (21), les moyens de sollicitation comprenant un manchon de raccordement (43) monté, libre en rotation, autour de l'arbre de support (41), une tige télescopique (22) comprenant un tube à emboîtement (55) supporté à pivotement par la sole (31) et un élément formant tige à emboîtement (52) introduit par coulissement dans le tube à emboîtement (55) et fixé au manchon de raccordement (43), et un ressort de compression (23) reçu dans le tube à emboîtement (55) de façon à faire saillir l'élément formant tige à emboîtement (52) hors du tube à emboîtement (55).

6. Tendeur tel que défini dans la revendication 1, dans lequel le bras de support (21) comporte une partie de base supportée par une sole (31), et un arbre de support (41) est disposé entre le pignon à chaîne mené (12) et l'extrémité extérieure du bras de support (21), les moyens de sollicitation comprenant un manchon de raccordement (43) monté, libre en rotation, autour de l'arbre de support (41), une tige télescopique (22) comprenant un tube à emboîtement (55) supporté à pivotement par la sole (31) et un élément formant tige à emboîtement (52) introduit par coulissement dans le tube à emboîtement (55) et fixé au manchon de raccordement (43), et un ressort de compression (23) reçu dans le tube à emboîtement (55) de façon à faire saillir l'élément formant tige à emboîtement (52) hors du tube à emboîtement (55), les moyens de verrouillage (56) comprenant une paire de pièces divisées (62), (63) conçues de façon à maintenir l'élément formant tige à emboîtement (52) entre elles, l'une des pièces divisées étant fixée au tube à emboîtement (55), et des boulons de fixation (64) s'étendant à travers l'une des pièces divisées (62), (63) et vissés dans l'autre pièce divisée.
